# EUROPEAN PATENT SPECIFICATION

(11) **EP 3 663 562 B1**
(45) Date of publication and mention of the grant of the patent: **16.03.2022**
(21) Application number: 19213167.0
(22) Date of filing: 03.12.2019
(51) Int. Cl.: F02C 7/18, F02K 3/06, B33Y 80/00, F01D 25/12

(54) **THERMAL MANAGEMENT SYSTEM FOR LOW BYPASS GAS TURBINE ENGINE**
WÄRMEVERWALTUNGSSYSTEM FÜR GASTURBINENMOTOR MIT GERINGEM BYPASS
SYSTÈME DE GESTION THERMIQUE POUR MOTEUR À TURBINE À GAZ À FAIBLE TAUX DE DILUTION

(30) Priority: 03.12.2018 US 201816207806
(43) Date of publication of application: 10.06.2020
(73) Proprietor: Raytheon Technologies Corporation, Farmington, CT 06032 (US)
(72) Inventor: ROBERGE, Gary D., Tolland, CT Connecticut 06084 (US)
(74) Representative: Dehns

(56) References cited:
- EP-A1- 3 290 673
- EP-A1- 3 483 543
- US-A1- 2009 053 043
- US-A1- 2018 094 583

## Description

### BACKGROUND

The present disclosure relates to a low bypass gas turbine engine and, more particularly, to a thermal management system at least partially integrated into a fan duct thereof.

Aircraft gas turbine engine thermal management systems utilize engine oil to reject heat from a number of sources such as bearing compartments, motor/generator cooling, avionics, and/or other systems. Low bypass ratio gas turbine engines for business jets and most military tactical aircraft applications are structural. Rejecting heat from the engine oil is typically accomplished through one or more heat exchangers that may require associated ducting and other ancillary structures that may compromise the structural capabilities and increase weight.

US 2009/053043 A1 discloses a prior art gas turbine engine according to the preamble of claim 1.

US 2018/094583 A1, EP3290673

A1 and EP 3483543 A1 disclose other prior art arrangements.

### SUMMARY

In one aspect, a gas turbine engine is provided as set forth in claim 1.

In another aspect, a method of thermal management is provided as set forth in claim 2.

A further embodiment of any of the foregoing embodiments of the present disclosure includes circulating oil from the tank located in the lower fan duct section of the fan duct assembly below the gas turbine engine to the upper fan duct section of the fan duct assembly via a jumper across the interface.

A further embodiment of any of the foregoing embodiments of the present disclosure includes circulating oil from the tank located in the lower fan duct section of the fan duct assembly.

The foregoing features and elements may be combined in various combinations without exclusivity, unless expressly indicated otherwise. These features and elements as well as the operation thereof will become more apparent in light of the following description and the accompanying drawings. It should be appreciated that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
FIG. 1 is a schematic cross-section of a low bypass gas turbine engine.
FIG. 2 is an exploded view of the low bypass gas turbine engine.
FIG. 3 is cross section of the gas turbine engine illustrating a fan duct assembly with an integrated additive manufactured heat exchanger of the thermal management system 80.
FIG. 4 is a partial phantom exterior side view of the fan duct assembly.
FIG. 5 is a schematic cross-sectional view of an internal surface of the fan duct assembly.
FIG. 6 is a partial phantom exterior side view of the fan duct assembly according to one disclosed non-limiting embodiment.
FIG. 7 is a partial phantom side view of the fan duct assembly according to one disclosed non-limiting embodiment.
FIG. 8 is a partial phantom side view of the fan duct assembly according to one disclosed non-limiting embodiment.
FIG. 9 is a schematic cross-sectional view of one oil flow passages within the fan duct assembly according to one disclosed non-limiting embodiment.

### DETAILED DESCRIPTION

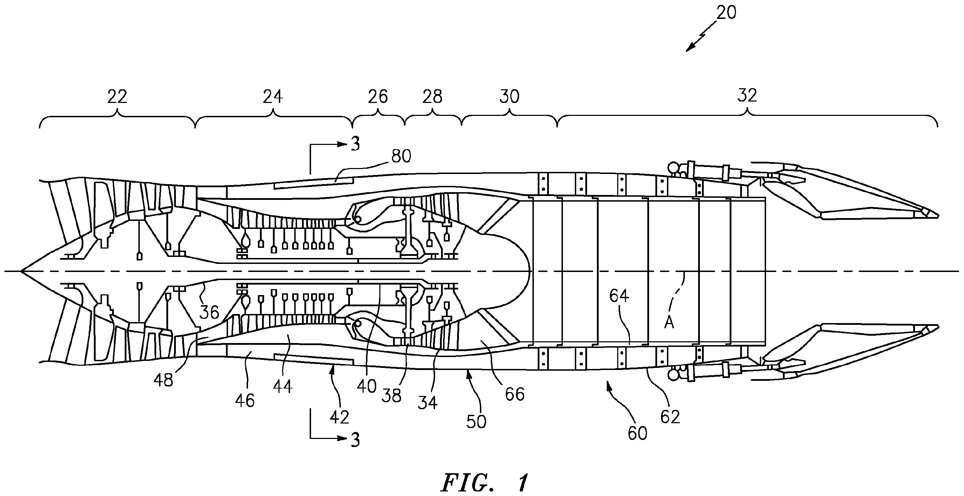

FIG. 1 schematically illustrates a gas turbine engine 20. The gas turbine engine 20 is disclosed herein as a two-spool low bypass turbofan that generally incorporates a fan section 22, a compressor section 24, a combustor section 26, a turbine section 28, an augmenter section 30, and a nozzle section 32 along a central longitudinal engine axis A. The bypass ratio (BPR) of a turbofan engine is the ratio between the mass flow rate of the bypass stream to the mass flow rate entering the core. The compressor section 24, the combustor section 26 and the turbine section 28 are generally referred to as the engine core. The fan section 22 and a low pressure turbine 34 of the turbine section 28 are coupled by a first shaft 36 to define a low spool. The compressor section 24 and a high pressure turbine 38 of the turbine section 28 are coupled by a second shaft 40 to define a high spool.

An outer fan duct engine structure 42 and an optional inner engine duct structure 44 define a generally annular secondary airflow path 46 around a primary airflow path 48. Depending on the bypass ratio of the engine under consideration, bypass flow in annular flowpath 46 may be defined by the outer fan duct 42 and outer case of compressor 24 with no inclusion of inner engine duct structure 44. It should be appreciated that various structures may define the outer engine structure 42 and the inner engine structure 44 which essentially define an exoskeleton to support the core engine therein. Air that enters the fan section 22 is divided between a core flow through the primary airflow path 48 and a secondary airflow through the secondary airflow path 46 which can be referred to as a bypass flow of low bypass ratio architecture. Although depicted as an augmented low bypass gas turbine engine (e.g., BPR about 0.2-2.5) in the disclosed non-limiting embodiment, it should be appreciated that the concepts described herein are applicable to other gas turbine engine architectures.

The core flow then passes through the combustor section 26, the turbine section 28, then the augmentor section 30 where fuel may be selectively injected and burned to generate additional thrust through the nozzle section 32. The secondary bypass airflow may be utilized for a multiple of purposes to include, for example, cooling and pressurization. The secondary airflow as defined herein is any flow different than the primary combustion gas exhaust airflow. The secondary airflow passes through an annulus defined by the outer engine structure 42 and the inner engine structure 44, then may be at least partially injected into the primary airflow path 48 adjacent the augmentor section 30 and the nozzle section 32.

The outer engine structure 42 may include a forward fan duct assembly 50 and an exhaust duct assembly 60. The inner engine structure 44 may include a center body with a tail cone. The exhaust duct assembly 60 may include an outer case 62 and a concentrically spaced inner liner 64 that operates as a heat shield to protect the outer case 62 from the exhaust gas flow. Air discharged from the fan section 22 is communicated through the secondary airflow path 46 which may be defined in part by the outer case 62 and the inner liner 64. Circumferentially arrayed augmentor vanes 66 extend generally radially between the center body and the exhaust duct assembly 60.

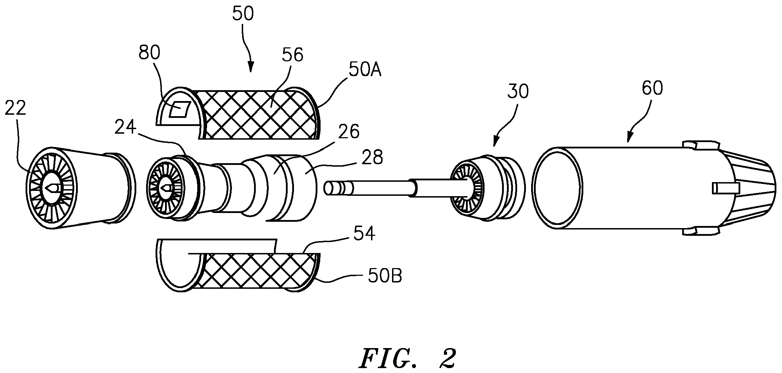

The forward fan duct assembly 50, in the illustrated embodiment, is split into two fan duct sections 50A, 50B (FIG. 2) along an axial interface 54 along a plane running parallel to the centerline A to facilitate assembly, inspection, and maintenance of core components. Alternatively, the fan duct assembly 50 may be a singular full-hoop structure or split into more than two segments. In the depicted embodiment, the first section 50A of the fan duct assembly 50 may be an upper half and the second section 50B may be a lower half. The fan duct assembly 50 may be formed with an isogrid outer surface 56 to increase strength and cross sectional moment of inertia in a structurally efficient manner and decrease weight thereof. An isogrid is typically a type of partially hollowed-out structure formed usually from a single metal plate (or face sheet) with triangular integral stiffening ribs (often called stringers).

The fan section 22 drives air along the secondary airflow path 46 to supply airflow with a thermal management system 80 at least partially integrated into the fan duct assembly 50. In one disclosed non-limiting embodiment, the thermal management system 80 may be in fluid communication with engine bearing compartments, and/or other systems.

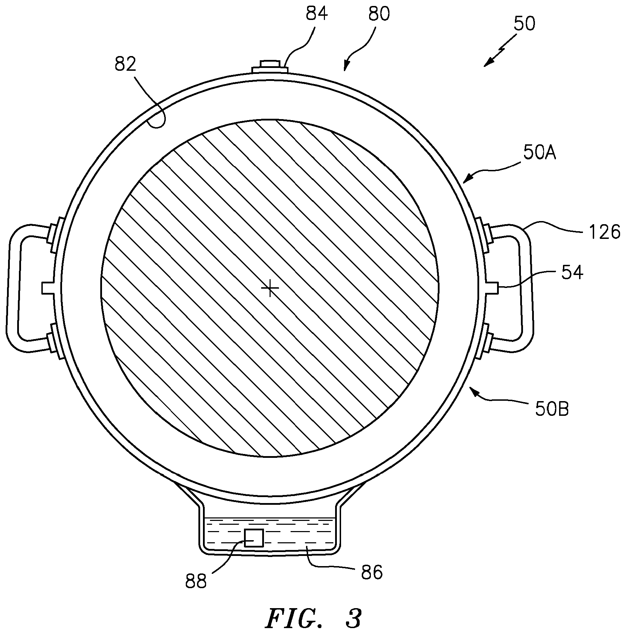

With reference to FIG. 3, the thermal management system 80 generally includes a heat exchanger 82 such as a liquid-air heat exchanger that extracts heat from engine oil that circulates therethrough and rejects heat to bypass flow 46. In this embodiment, the heat exchanger 82 is at least partially integrated into either or both of the fan duct sections 50A, 50B of the fan duct assembly 50. That is, at least a portion of fan duct assembly 50 and the heat exchanger 82 are additively manufactured such that the heat exchanger 82 is integrated into the fan duct sections 50A, 50B. In this embodiment, the heat exchanger 82 is integrated into the fan duct assembly 50 via additive manufacturing. That is, the fan duct sections 50A, 50B, or portions thereof that form the heat exchanger 82, are integrally manufactured with an additive manufacturing process.

The additive manufacturing process sequentially builds-up layers of materials material that include but are not limited to, various titanium alloys including Ti 6-4, Inconel 625 Alloy, Inconel 718 Alloy, Haynes 230 Alloy, stainless steel, tool steel, cobalt chrome, titanium, nickel, aluminum, ceramics, plastics and others in atomized powder material form. In other examples, the starting materials can be non-atomized powders, filled or unfilled resins in liquid, solid or semisolid forms, and wire-based approaches such as wire arc for metals and Fused Deposition Modeling (FDM) for polymers. Alloys such as Inconel 625, Inconel 718 and Haynes 230 may have specific benefit for high temperature environments, such as, for example, environments typically encountered by aerospace and gas turbine engine articles. Examples of the additive manufacturing processes include, but are not limited to, SFF processes, 3-D printing methods, Sanders Modelmaker, Selective Laser Sintering (SLS), 3D systems thermojet, ZCorp 3D printing Binder jetting, Extrude ProMetal 3D printing, stereolithography, Layered Object Manufacturing (LOM), Fused Deposition Modeling (FDDM), Electron Beam Sintering (EBS), Direct Metal Laser Sintering (DMLS), Electron Beam Melting (EBM), Electron Beam Powder Bed Fusion (EB-PBF), Electron Beam Powder Wire (EBW), Laser Engineered Net Shaping (LENS), Laser Net Shape Manufacturing (LNSM), Direct Metal Deposition (DMD), Laser Powder Bed Fusion (L-PBF), Digital Light Synthesis^{™} and Continuous Liquid Interface Production (CLIP^{™}). Although particular additive manufacturing processes are recited, any rapid manufacturing method can alternatively or additionally be used. In addition while additive manufacturing is the envisioned approach for fabrication of heat exchangers 82, alternate embodiments may utilize alternate manufacturing approaches including cast, brazed, welded or diffusion bonded structures.

The heat exchanger 82 of the thermal management system 80 may be in communication with a distribution manifold 84 and an oil tank 86 via an electrically driven boost pump 88. The distribution manifold 84 receives heated oil and distributes the oil to the heat exchanger 82 to extract heat therefrom utilizing bypass flow through the secondary airflow path 46.

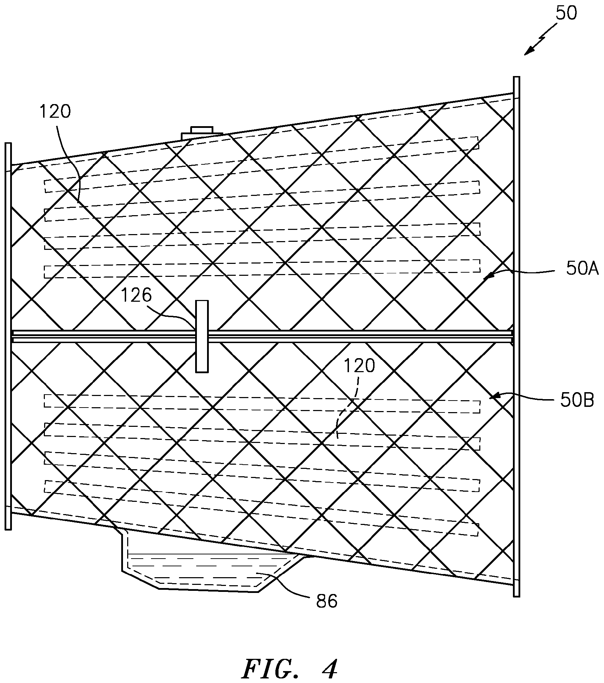

The heat exchanger 82, as defined herein, may be considered a plate-fin, a shell-tube, or other air-fluid passage geometry. A multiple of passages 120 (FIG. 4) that form the heat exchanger 82 may be connected across the interface 54 of the fan duct sections 50A, 50B with jumpers 126 to provide core engine access. The multiple of passages 120 and jumpers 126 are readily additively manufactured to be integral with the fan duct sections 50A, 50B. Alternatively, the jumpers 126 may be conventional tubes and plumbing to permit disassembly of the fan duct sections 50A, 50B. Alternatively still, a full-hoop single piece fan duct 50 avoids the requirement for any sort of jumpers 126.

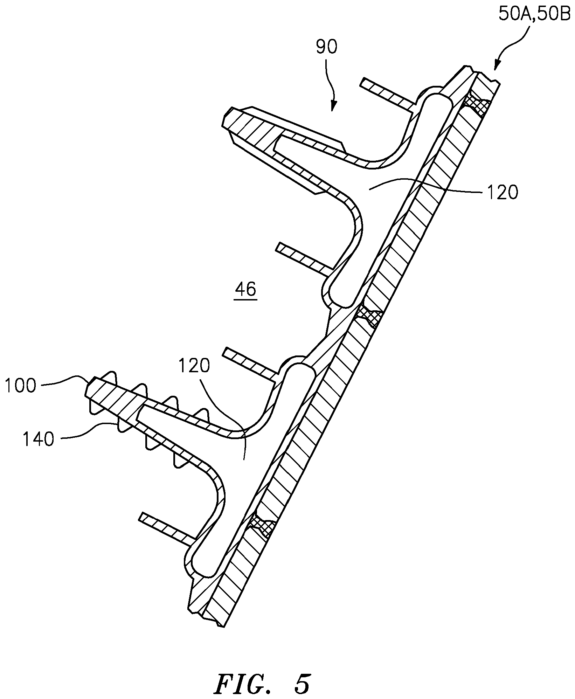

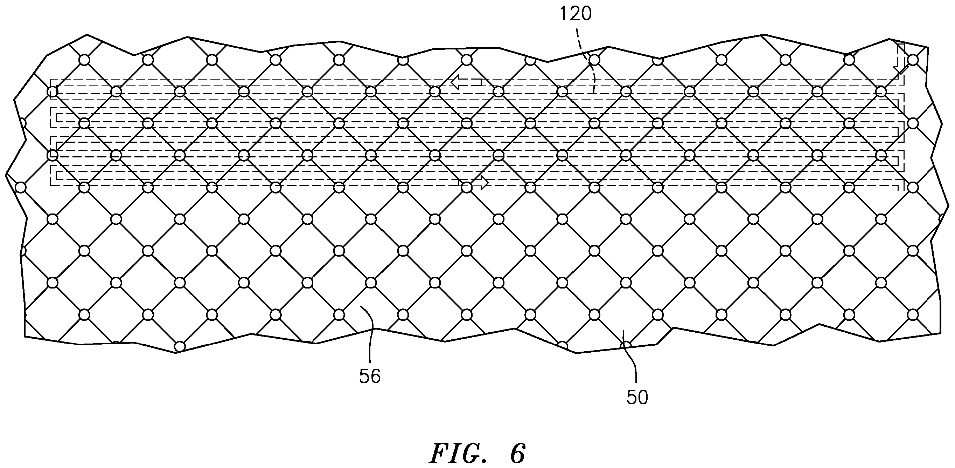

With reference to FIG. 5, an internal surface 90 of the fan duct sections 50A, 50B that at least partially form the heat exchanger 82 is exposed to the annular secondary airflow path 46. The internal surface 90 of fan duct sections 50A, 50B forms the heat exchanger 82 over a relatively large surface area to facilitate heat transfer from the multiple of passages 120 that circulate the oil (FIG. 6). Alternatively, the internal surface 90 of fan duct sections 50A, 50B that at least partially form the heat exchanger 82 may be contained within a discrete area.

The internal surface 90 of the fan duct sections 50A, 50B that at least partially form the heat exchanger 82 are manufactured to form a multiple of fins 100 that extend along and/or across the length of fan duct sections 50A, 50B with respect to the engine central longitudinal axis A. Axially oriented cooling fins have synergy of providing convective cooling while simultaneously providing dramatic increases in cross sectional moment of inertia for duct strength and stiffness. That is, the heat exchanger 82 is additively manufactured such that the internal surface 90 is contoured to follow the aerodynamic lines of the annular secondary airflow path 46 such that a portion thereof or the entire surface may be ribbed, finned, corrugated, or otherwise shaped to locate a multiple of passages 120 to interact with the bypass flow.

The fins 100 are generally parallel to the bypass flow to resist fouling/blockage from ingested dirt and debris and to minimize aerodynamic induced pressure loss of bypass flow 46 while simultaneously allowing the needed level of heat transfer to cool engine oil or other working fluids. The internal surface 90 may be determined via Computational Flow Dynamics (CFD) that may, for example, be utilized to set a ratio of local surface area to flow area to control the pressure drop per unit length of the annular secondary airflow path 46, acoustics, and/or other considerations. The quality and uniformity of the bypass flow will be more uniform than engines using one or more localized ducted heat exchangers. Fan duct sections 50A, 50B with the integrated multiple of passages 120 may be formed via additive manufacturing or other techniques to circulate the oil in a winding downward direction toward the oil tank 86. Oil is collected in the integrally formed oil tank 86 located at the bottom of the fan duct sections 50B. In hybrid electric propulsion systems that integrate a low spool motor-generator, fan rotation using stored electrical power can be utilized to extend circulation after engine shutdown.

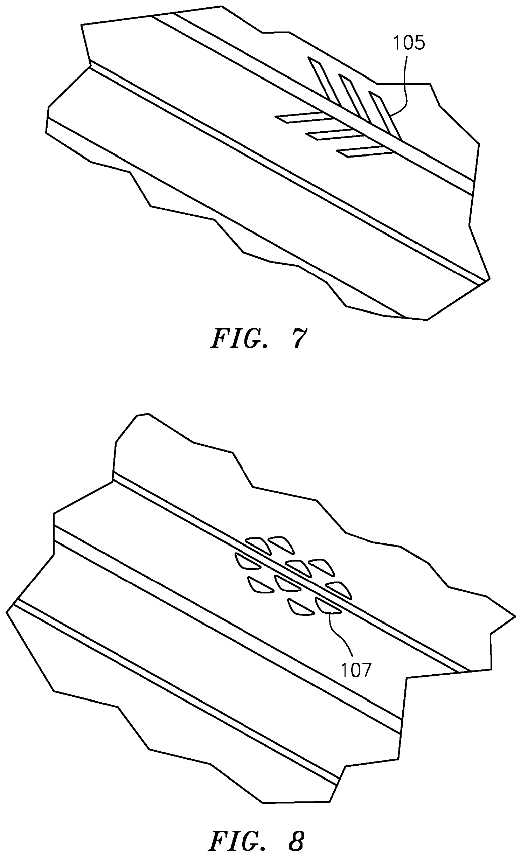

With continued reference to FIG. 5, each of the multiple of passages are of a tailored cross-sectional geometry, e.g., "T" shaped to correspond with the internal surface 90. Heat transfer may be further augmented by the use of external features 140 such as chevrons 105 (FIG. 7), bumps 107 (FIG. 8) or other features formed on the internal surface 90 designed to augment convective heat transfer with bypass flow 46.

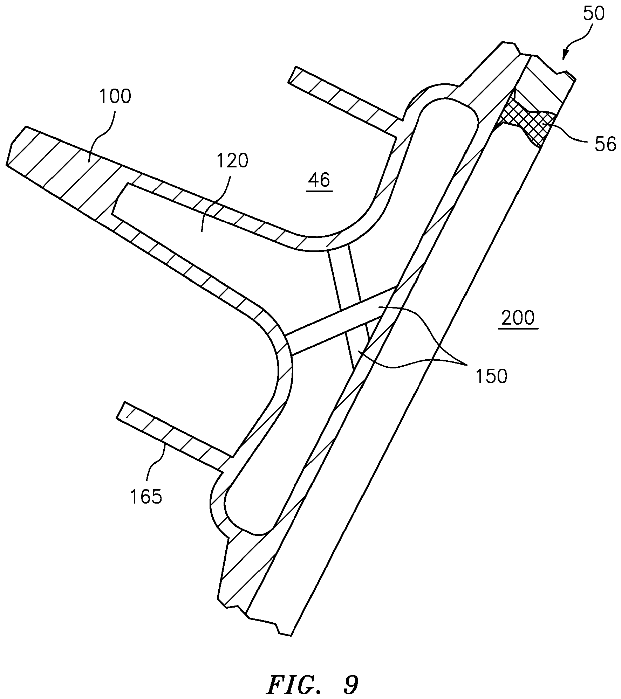

With reference to FIG. 9, alternatively, or in addition, internal oil or fluid convective heat transfer and interaction with cooling fin 100 may be further augmented by inner features 150 within each of the multiple of passages 120. For example, inner features may be configured by control of fin density, thickness, and type can to balance stress with respect to the thermal loads. In one example, the inner features 150 are airfoil shapes that are staggered to further mix the oil. For maximum structural loads, the inner features 150 may include, for example, box, honeycomb, triangular, or other load bearing type structures, while for maximum thermal capabilities, the inner features 150 may include, for example, thin surfaces that provide significant surface area as well as combinations thereof.

A multiple of heat transfer augmentation features such as the isogrid outer surface 56 of the fan duct assembly 50 may be located to facilitate convective cooling with an engine bay ventilation flow 200 within the airframe. Alternatively, or in addition, other heat transfer augmentation features such as rails 165 may extend from the internal surface 90 into the secondary airflow path 46 to further convective cooling of the passages 120. Use of inner duct structure 44 may provide thermal benefits by shielding the heat exchanger 82 from the radiated heat generated by HPC case 24, combustor/diffuser case 26 and turbine cases 28. An increased capability to cool engine oil can have resultant advantages such as reduced sized fuel-oil coolers and reduced fuel temperatures that permits increased fuel subsystem heat rejection capability.

The thermal management system 80 provides for a greater cooling surface area compared to individual conventional heat exchangers by utilizing the circumference of fan duct assembly 50 and the interface with the bypass flow. The surface area provides increased time for cooling as engine oil traverses the circuit from entrance to exit as well as avoids ducting and other associated structures to simplify maintenance and increase engine structural rigidity. In addition, use of a more distributed and uniform heat exchanger can help to provide more uniform downstream pressure profile into augmentor and exhaust system which in turn may beneficially impact augmentor combustion characteristics and the implementation of local cooling features using bypass flow 46. Use of additive manufacturing allows local tailoring improved structural strength, increased wetted area, enhanced cooling effectiveness and weight reduction.

It should be appreciated that like reference numerals identify corresponding or similar elements throughout the several drawings. It should also be appreciated that although a particular component arrangement is disclosed in the illustrated embodiment, other arrangements will benefit herefrom.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A gas turbine engine (20) comprising:
a core engine defined about an axis (A), the core engine having a primary exhaust flow path (48);
a fan section (22) driven by the core engine about the axis (A);
an upper duct section (50A) defined along the axis (A) to at least partially surround the core engine; and
a lower duct section (50B) defined along the axis (A), the lower duct section (50B) mateable with the upper duct section (50A) along an axial interface (54) to enclose the core engine, to form a bypass duct which at least partially defines an annular secondary fan bypass flow path (46) around the primary flow path (48);
**characterised in that** the gas turbine engine (20) further comprises:
an additively manufactured heat exchanger (82) formed into an internal surface (90) of the upper duct section (50A), wherein the additively manufactured heat exchanger (82) comprises a multiple of fins (100) that extend into the annular secondary fan bypass flow path (46), at least one of the multiple of fins (100) contains at least one of a multiple of additively manufactured passages (120), at least one of the multiple of additively manufactured passages (120) of a tailored cross-sectional geometry that correspond with the internal surface (90); and
an additively manufactured tank (86) formed into the lower duct section (50B), the tank (86) in fluid communication with the multiple of additively manufactured passages (120).

2. A method of thermal management for the gas turbine engine (20) of claim 1, wherein the gas turbine engine (20) is a low bypass gas turbine engine (20), and the method comprises:
communicating an oil through the additively manufactured heat exchanger (82), the internal surface (90) being an internal surface (90) of a fan duct assembly (50) which at least partially defines the annular secondary fan bypass flow path (46) around the primary flow path (48).

3. The method as recited in claim 2, further comprising circulating oil from the tank (86) located in the lower fan duct section (50B) of the fan duct assembly (50).

4. The method as recited in claim 3, wherein the tank (86) is below the gas turbine engine (20) and the oil is circulated to the upper fan duct section (50A) of the fan duct assembly (50) via a jumper (126) across the interface (54).

## Patentansprüche

1. Gasturbinenmotor (20), der Folgendes umfasst:
einen Kernmotor, der um eine Achse (A) definiert ist, wobei der Kernmotor einen primären Abgasströmungsweg (48) aufweist;
einen Gebläseabschnitt (22), der von dem Kernmotor um die Achse (A) angetrieben wird;
einen oberen Kanalabschnitt (50A), der entlang der Achse (A) definiert ist, um den Kernmotor zumindest teilweise zu umgeben; und
einen unteren Kanalabschnitt (50B), der entlang der Achse (A) definiert ist, wobei der untere Kanalabschnitt (50B) mit dem oberen Kanalabschnitt (50A) entlang einer axialen Schnittstelle (54) zusammengefügt werden kann, um den Kernmotor zu umschließen, um einen Bypasskanal zu bilden, der zumindest teilweise einen ringförmigen sekundären Gebläse-Bypass-Strömungsweg (46) um den primären Strömungsweg (48) herum definiert;
**dadurch gekennzeichnet, dass** der Gasturbinenmotor (20) ferner umfasst:
einen zusätzlich hergestellten Wärmetauscher (82), der in einer Innenoberfläche (90) des oberen Kanalabschnitts (50A) ausgebildet ist, wobei der zusätzlich hergestellte Wärmetauscher (82) eine Vielzahl von Rippen (100) umfasst, die sich in den ringförmigen sekundären Gebläse-Bypass-Strömungsweg (46) erstrecken, mindestens eine der Vielzahl von Rippen (100) mindestens einen von einer Vielzahl von zusätzlich hergestellten Durchgängen (120) enthält, mindestens einer der mehreren zusätzlich hergestellten Durchgänge (120) eine maßgeschneiderte Querschnittsgeometrie aufweist, die mit der Innenoberfläche (90) übereinstimmt; und
einen zusätzlich hergestellten Tank (86), der in den unteren Kanalabschnitt (50B) ausgebildet ist, wobei der Tank (86) in Flüssigkeitsverbindung mit der Vielzahl von zusätzlich hergestellten Kanälen (120) steht.

2. Verfahren zur Wärmeverwaltung für den Gasturbinenmotor (20) nach Anspruch 1, wobei der Gasturbinenmotor (20) ein Gasturbinenmotor (20) mit niedrigem Nebenstrom ist und das Verfahren Folgendes umfasst:
Durchleiten eines Öls durch den zusätzlich hergestellten Wärmetauscher (82), wobei die Innenoberfläche (90) eine Innenoberfläche (90) einer Gebläsekanalanordnung (50) ist, die zumindest teilweise den ringförmigen sekundären Gebläse-Bypass-Strömungsweg (46) um den primären Strömungsweg (48) herum definiert.

3. Verfahren nach Anspruch 2, ferner umfassend das Umwälzen von Öl aus dem Tank (86), der sich im unteren Gebläsekanalabschnitt (50B) der Gebläsekanalanordnung (50) befindet.

4. Verfahren nach Anspruch 3, wobei sich der Tank (86) unterhalb des Gasturbinenmotors (20) befindet und das Öl über eine Brücke (126) über die Schnittstelle (54) zum oberen Gebläsekanalabschnitt (50A) der Gebläsekanalanordnung (50) zirkuliert.

## Revendications

1. Moteur à turbine à gaz (20) comprenant :
un moteur central défini autour d'un axe (A), le moteur central ayant un trajet d'écoulement d'échappement primaire (48) ;
une section de soufflante (22) entraînée par le moteur central autour de l'axe (A) ;
une section de conduit supérieure (50A) définie le long de l'axe (A) pour entourer au moins partiellement le moteur central ; et
une section de conduit inférieure (50B) définie le long de l'axe (A), la section de conduit inférieure (50B) pouvant s'accoupler avec la section de conduit supérieure (50A) le long d'une interface axiale (54) pour enfermer le moteur central, afin de former un conduit de dérivation qui définit au moins partiellement un trajet d'écoulement de dérivation secondaire annulaire de soufflante (46) autour du trajet d'écoulement primaire (48) ;
**caractérisé en ce que** le moteur à turbine à gaz (20) comprend en outre :
un échangeur de chaleur fabriqué de manière additive (82) formé dans une surface interne (90) de la section de conduit supérieure (50A), dans lequel l'échangeur de chaleur fabriqué de manière additive (82) comprend une pluralité d'ailettes (100) qui s'étendent dans le trajet d'écoulement de dérivation secondaire annulaire de soufflante (46), au moins l'une de la pluralité d'ailettes (100) contient au moins l'un d'une pluralité de passages fabriqués de manière additive (120), au moins l'un de la pluralité de passages fabriqués de manière additive (120) a une géométrie de section transversale adaptée qui correspond à la surface interne (90) ; et
un réservoir fabriqué de manière additive (86) formé dans la section de conduit inférieure (50B), le réservoir (86) étant en communication fluidique avec la pluralité de passages fabriqués de manière additive (120).

2. Procédé de gestion thermique pour le moteur à turbine à gaz (20) selon la revendication 1, dans lequel le moteur à turbine à gaz (20) est un moteur à turbine à gaz à faible taux de dilution (20), et le procédé comprend :
la communication d'une huile à travers l'échangeur de chaleur fabriqué de manière additive (82), la surface interne (90) étant une surface interne (90) d'un ensemble de conduit de soufflante (50) qui définit au moins partiellement le trajet d'écoulement de dérivation secondaire annulaire de soufflante (46) autour du trajet d'écoulement primaire (48).

3. Procédé selon la revendication 2, comprenant en outre la mise en circulation d'une huile du réservoir (86) situé dans la section de conduit inférieure de soufflante (50B) de l'ensemble de conduit de soufflante (50).

4. Procédé selon la revendication 3, dans lequel le réservoir (86) se trouve sous le moteur à turbine à gaz (20) et l'huile est mise en circulation vers la section de conduit supérieure de soufflante (50A) de l'ensemble de conduit de soufflante (50) via un raccordement (126) à travers l'interface (54).
